# EUROPÄISCHE PATENTSCHRIFT

(11) **EP 2 809 463 B1**
(45) Veröffentlichungstag und Bekanntmachung des Hinweises auf die Patenterteilung: **11.01.2017**
(21) Anmeldenummer: 13705099.3
(22) Anmeldetag: 01.02.2013
(51) Int. Cl.: B21D 39/20, B21D 41/02, F16L 13/16, B29C 57/04

(54) **EXPANSIONSKOPF FÜR AUFWEITWERKZEUGE, DIESEN UMFASSENDES EXPANSIONSWERKZEUG SOWIE DEREN VERWENDUNG**
EXPANSION HEAD FOR EXPANSION TOOLS, EXPANSION TOOL COMPRISING SAID EXPANSION HEAD AND USE THEREOF
TÊTE D'EXPANSION POUR OUTILS D'ÉLARGISSEMENT, OUTIL D'EXPANSION COMPRENANT LADITE TÊTE ET UTILISATION DE LADITE TÊTE D'EXPANSION ET DUDIT OUTIL D'EXPANSION

(30) Priorität: 03.02.2012 DE 102012100894
(43) Veröffentlichungstag der Anmeldung: 10.12.2014
(73) Patentinhaber: REHAU AG + Co, 95111 Rehau (DE)
(72) Erfinder: BÄRTHLEIN, Sebastian, 91052 Erlangen (DE); SAPPER, Richard, 91126 Schwabach (DE); CHRISTOPH, Sven, 91058 Weisendorf (DE)
(86) Internationale Anmeldenummer: PCT/EP2013/000312
(87) Internationale Veröffentlichungsnummer: WO 2013/113509

(56) Entgegenhaltungen:
- EP-A1- 0 878 287
- EP-A2- 0 718 057
- EP-B1- 1 278 001
- DE-U1- 29 813 935
- JP-A- 2003 062 902
- JP-A- 2010 051 974

## Beschreibung

Die vorliegende Erfindung betrifft einen Expansionskopf für Aufweitwerkzeuge für hohle Werkstücke, insbesondere für die Enden von Kunststoffrohren und Metall-Kunststoff-Verbundrohren, gemäß dem Oberbegriff des Anspruchs 1.

Derartige Expansionsköpfe sind aus der EP 0 044 795 A2 und der DE 42 02 348 C1 bekannt. Die Expansionsköpfe bestehen aus einzelnen Segmenten, den sog. Spreizbacken, deren Basisteile gemeinsam in einer Überwurfkappe aufgenommen sind und die in radialer Richtung nach außen beweglich sind. Derartige Expansionsköpfe werden an Aufweitwerkzeugen angebracht und insbesondere über eine Schraubverbindung mit diesen verbunden. Die Aufweitvorrichtungen sind grundsätzlich aus einem Pressgerät mit einem Dorn, der in oder an dem Gehäuse des Pressgerätes axial verschiebbar gehalten ist und an seinem einen axialen Endbereich eine Kegelfläche aufweist, und einem Expansionskopf, der vorzugsweise über eine Aufnahmevorrichtung für den Expansionskopf an dem Pressgerät festlegbar ist, aufgebaut. Durch eine Antriebsvorrichtung, die manuell oder maschinell angetrieben werden kann, wird der Dorn in axialer Richtung in Richtung des Expansionskopfes bewegt. An der Innenseite definieren die Spreizbacken des Expansionskopfes eine zentrale kegelige Aufnahme, in die die Kegelfläche des vom Pressgerät in axialer Richtung verschiebbaren Dorns eingreift. Bei Betätigung des Pressgerätes wird der Dorn in den Expansionskopf hineingedrückt, wobei es zu einem Kontakt zwischen der Kegelfläche des Dorns und der von den Spreizbacken gebildeten Aufnahme kommt. Bei weiterer axialer Bewegung des Dorns in Richtung des Expansionskopfes werden die Spreizbacken radial nach außen gedrückt und es kommt zu einem radialen Hub der Spreizbacken, so dass die Spreizbacken die Enden eines hohlen Werkstücks, insbesondere eines Kunststoffrohres oder eines Metall-Kunststoff-Verbundrohres, in das der Expansionskopf eingeführt ist, aufweiten. Dabei gehen die Spreizbacken vom geschlossenen Zustand in den Expansionszustand oder offenen Zustand über. Bei einer radialen Rückwärtsbewegung des Dorns aus dem Expansionskopf werden die Segmente durch Rückstellmittel (beispielsweise eine ringförmige Zugfeder oder ein elastischer O-Ring) in ihre Ausgangsposition zurückbewegt. Mit den in der EP 0 044 795 A2 oder der DE 42 02 348 C1 beschriebenen Expansionsköpfen soll beim Aufweitprozess ein möglichst gleichmäßiges Aufweiten des hohlen Werkstücks erzielt werden. Dabei kann es erforderlich sein, die Position des Expansionskopfes in dem Rohrende nach Lösen der Spreizbacken um einen vorgegebenen Winkel zu verdrehen (bei Expansionsköpfen mit sechs Spreizbacken sollte die Drehung um einen Winkel von vorzugsweise etwa 30° erfolgen) und einen zweiten Aufweitprozess durchzuführen.

Ein regelmäßiges Aufweiten eines Rohrendes ist deshalb erforderlich, um nach Einführen eines Verbindungsstückes durch Verpressen mit einer über das Rohrende geführten Schiebe- oder Presshülse eine dichte Verbindung zu erzielen. Diese Expansionsköpfe haben jedoch den Nachteil, dass aufgrund des gleichmäßigen Aufweitbildes bereits vor dem Verpressen (axiales Aufschieben einer Schiebehülse über das Rohrende mit darin eingeführtem Verbindungsstück bei einer Schiebehülsenverbindung bzw. radiales Verpressen einer Presshülse über ein Rohrende mit darin eingeführtem Verbindungsstück) eine dichte Verbindung entsteht, so dass der Installateur bei einem Dichtigkeitstest/Druckprüfung nicht mehr feststellen kann, ob sämtliche Verbindungen eines Hausinstallationssystems (Wasserinstallation, Rohrsystem einer Fußbodenheizung u. ä.) auch tatsächlich verpresst worden sind.

Zur Lösung dieses Problems sind im Stand der Technik Maßnahmen bekannt, in eine Verbindung im unverpressten Zustand eine Sollleckagestelle einzuführen, wobei die Verbindung nach dem Verpressen gas- oder flüssigkeitsdicht verschlossen ist. Beispielsweise schlägt die DE 298 13 935 U1 die Verwendung eines Dichtrings in einer derartigen Pressverbindung vor, wobei der Dichtring Ausnehmungen oder verdickte Stellen aufweist, die im unverpressten Zustand der Verbindung für die gewünschte Leckagestelle sorgen. Diese Lösung hat jedoch den Nachteil, dass es während des Montagevorganges zu Verdrehungen des Dichtelementes kommen kann, womit die Gefahr einhergeht, dass der gewünschte Effekt eines Erzielens einer Sollleckagestelle nicht mehr gewährleistet ist.

Eine weitere Möglichkeit zur Herstellung einer Verbindung mit einer Sollleckagestelle geht aus der EP 1 278 001 B1 hervor. Darin ist ein Verfahren zur Herstellung einer Pressverbindung zwischen einem Fitting und einem Rohrende mit in eine Nut des Fittings eingelegtem Dichtungselement beschrieben, wobei zunächst das Rohrende mit einem geeigneten Werkzeug innenseitig mit einer Sicke versehen wird, die vor dem Verpressen mit dem Fitting eine Leckagestelle bildet, das Rohrende dann mit dem Werkzeug kalibriert und angefast wird und anschließend das Verpressen erfolgt. Darüber hinaus beschreibt die EP 1 278 001 B1 ein Werkzeug zur Verwendung in diesem Verfahren, das zur Bildung der Sicke an der Rohrinnenseite separate Aufweitkörper besitzt. Die in der EP 1 278 001 B1 beschriebene Lösung erfordert aber ein weiteres Werkzeug, das neben der Bildung der Sicke auch zum Kalibrieren und Anfasen des Rohrendes geeignet sein muss und somit einen komplizierten Aufbau aufweist.

Aufweitwerkzeuge mit Expansionsköpfen, die an der äußeren Oberfläche Erhöhungen aufweisen, sind aus der JP 2003 062 902 A und der JP 2010 051 974 A bekannt.

Damit besteht die Aufgabe der vorliegenden Erfindung darin, die Möglichkeiten der Bildung einer Sollleckagestelle im unverpressten Zustand bei einer Rohrverbindung mit aufgeweiteten Rohrenden dahingehend weiterzubilden, dass ein Werkzeug ohne komplizierten Aufbau verwendet werden kann. Darüber hinaus sollen an der Bildung der entsprechenden Rohrverbindung möglichst wenige Bauteile eingesetzt werden und die Sollleckagestelle soll durch den Montagevorgang nicht mehr negativ beeinträchtigt werden können.

Diese und andere Aufgaben werden durch einen Expansionskopf für Aufweitwerkzeuge für hohle Werkstücke, insbesondere für die Enden von Kunstoffrohren und Metall-Kunststoff-Verbundrohren, mit den Merkmalen des Anspruchs 1 bzw. durch ein Aufweitwerkzeug für hohle Werkstücke mit den Merkmalen des Anspruchs 9 bzw. durch die Verwendung gemäß Anspruch 10 gelöst. Die grundsätzliche Funktionsweise des erfindungsgemäßen Aufweitwerkzeuges entspricht dabei der Funktionsweise, wie sie im Zusammenhang mit den in der EP 0 044 795 A2 und DE 42 02 348 C1 beschriebenen Expansionsköpfen beschrieben ist. Bevorzugte Ausführungsformen des erfindungsgemäßen Expansionskopfes sind in den davon abhängigen Ansprüchen beschrieben.

Gemäß der vorliegenden Erfindung wurde erkannt, dass durch Einbringen einer sich in Richtung der Längsachse der Spreizbacken erstreckende Vertiefung und/oder Erhöhung an der ansonsten annähernd zylinderförmigen Außenwandung der Spreizbacken beim Aufweiten eine entsprechende Deformation des Rohrendes bewirkt, durch die eine ententsprechende Sollleckagestelle im unverpressten Zustand der Rohrverbindung gewährleistet ist, wenn sich die Vertiefung und/oder Erhöhung über die gesamte Außenfläche mindestens einer Spreizbacke erstreckt. Auf diese Weise ist zudem eine hohe mechanische Festigkeit der einzelnen Spreizbacken gewährleistet. Der entsprechende Expansionskopf besitzt einen einfachen Aufbau und kann mit am Markt befindlichen, gängigen Aufweitwerkzeugen eingesetzt werden. Da die Deformation rohrseitig erfolgt, besteht keine Gefahr, dass während des Verpressens die Sollleckagestelle aufgrund von Drehungen innerhalb der Verbindung unwirksam wird.

Dementsprechend liegt die vorliegende Erfindung in der Bereitstellung eines Expansionskopfes für Aufweitwerkzeuge für hohle Werkstücke, insbesondere für die Enden von Kunststoffrohren und Metall-Kunststoff-Verbundrohren, die eine Überwurfkappe mit einem radial einwärts gerichteten Führungsflansch und einem Satz von sektorförmig ausgebildeten Spreizbacken umfasst, die jeweils einzeln durch einen Innenflanschsektor, der mit dem Führungsflansch überlappt, in der Überwurfkappe aufgenommen sind, insbesondere durch den Innenflanschsektor in einer radialen Nut der Überwurfkappe radial beweglich am Führungsflansch geführt sind, wobei der Satz von sektorförmig ausgebildeten Spreizbacken zwischen einem geschlossenen Zustand und einem Expansionszustand beweglich ist, im geschlossenen Zustand durch die Außenwandung der Spreizbacken annähernd eine Zylindermantelfläche ausgebildet ist und die Außenwandung mindestens einer der Spreizbacken wenigstens eines sich in Richtung der Längsachse der Spreizbacken erstreckende Vertiefung und/oder Erhöhung aufweist und sich die Vertiefung und/oder Erhöhung über die gesamte Außenfläche mindestens einer Spreizbacke erstreckt. Darüber hinaus liegt die vorliegende Erfindung in der Bereitstellung eines Aufweitwerkzeuges für hohle Werkstücke, insbesondere für die Enden von Rohren aus Kunststoffen und aus mit Kunststoffen überzogenen Metallen, das einen derartigen einen Expansionskopf umfasst, sowie in der Verwendung eines derartigen Expansionskopfes oder eines derartigen Aufweitwerkzeugs.

Dabei kann es sich als günstig erweisen, wenn die Vertiefung und/oder die Erhöhung ungefähr in der Mitte der Außenwandung der Spreizbacke angeordnet ist. Eine derartige Anordnung der Vertiefung/Erhöhung trägt zur Stabilität der Spreizbacke bei und gewährleistet eine ausreichende Deformation des expandierten Rohrendes, so dass eine ausreichende Sollleckagestelle beim Aufweitprozess erzeugt wird.

Ebenso kann es sich als günstig erweisen, wenn mindestens eine der Spreizbacken zwei Vertiefungen und/oder Erhöhungen aufweist. Auf diese Weise können mit einem Aufweitvorgang mehrere Sollleckagestellen erzeugt werden. In diesem Zusammenhang kann es von besonderem Vorteil sein, wenn die beiden Vertiefungen und/oder Erhöhungen jeweils am seitlichen Rand der Außenwandung angeordnet sind. Auf diese Weise ergänzen sich die Vertiefungen/Erhöhungen von zwei benachbarten Spreizbacken zu einer entsprechenden Vertiefung/Erhöhung mit größerer Breite, so dass eine stärkere Deformation des aufgeweiteten Rohrendes erzeugt wird.

Es kann sich auch als nützlich erweisen, wenn sich die Vertiefung(en) und/oder Erhöhung(en) über 2 % bis 50 % der Fläche der Außenwandung erstreckt/erstrecken. Ein Anteil der Erhöhungen und/oder Vertiefungen in diesem Bereich gewährleistet einerseits eine ausreichende Deformation des aufgeweiteten Rohrendes und andererseits eine ausreichende Stabilität der Außenwandung der Spreizbacken. Dabei hat sich ein Flächenanteil von 10 bis 35 % als vorteilhaft erwiesen, wobei ein Flächenanteil von 15 bis 30 % besonders bevorzugt ist.

Es kann auch von Vorteil sein, wenn die Vertiefung(en) und/oder Erhöhung(en) eine maximale Tiefe/Höhe aufweist/aufweisen, die 3 % bis 35 % des Durchmessers des durch die Spreizbacken gebildeten Zylinders entspricht. Eine Wahl der maximalen Tiefe der Vertiefung(en) bzw. der maximalen Höhe der Erhöhung(en) gewährleistet wiederum einerseits eine praktisch ausreichende Deformation des aufgeweiteten Rohrendes und andererseits eine ausreichende mechanische Stabilität der Spreizbacken. Dabei hat sich eine maximale Tiefe/Höhe im Bereich von 5 bis 25 % und insbesondere von 10 bis 20 % des Durchmessers des durch die Spreizbacken gebildeten Zylinders als besonders vorteilhaft erwiesen.

Ebenso kann es sich als vorteilhaft erweisen, wenn jede der Spreizbacken mindestens eine Vertiefung und/oder Erhöhung aufweist. Dadurch wird eine hohe Anzahl an Sollleckagestellen erzeugt, die im Falle eines Dichtigkeitstests ein fehlendes Verpressen sich anzeigen.

Es kann auch hilfreich sein, wenn die Spreizbacken an ihrer der Überwurfkappe abgewandten Seite eine Verjüngung oder Fase aufweisen. Dadurch kann ein gleichmäßiger Übergang zwischen dem aufgeweiteten und dem nicht aufgeweiteten Teil des hohlen Werkstücks nach dem Aufweitvorgang erzielt werden.

Ebenso kann es sich als günstig erweisen, wenn die Kanten der Spreizbacken abgerundet, gebrochen oder angefast sind. Dies führt dazu, dass sich die Spreizbacken beim Aufweitvorgang weniger stark in das Material der Rohrinnenwand einprägen, so dass eine stabiler Rohrverbindung gebildet werden kann.

Im Folgenden soll die vorliegende Erfindung unter Bezugnahme auf die in den Figuren dargestellte Ausführungsform im Detail erläutert werden.

Im Folgenden soll die vorliegende Erfindung unter Bezugnahme auf die in den Figuren dargestellte Ausführungsform im Detail erläutert werden. Es versteht sich, dass die vorliegende Erfindung nicht auf die gezeigten Ausführungsformen beschränkt sein soll.

### Kurze Beschreibung der Zeichnungen

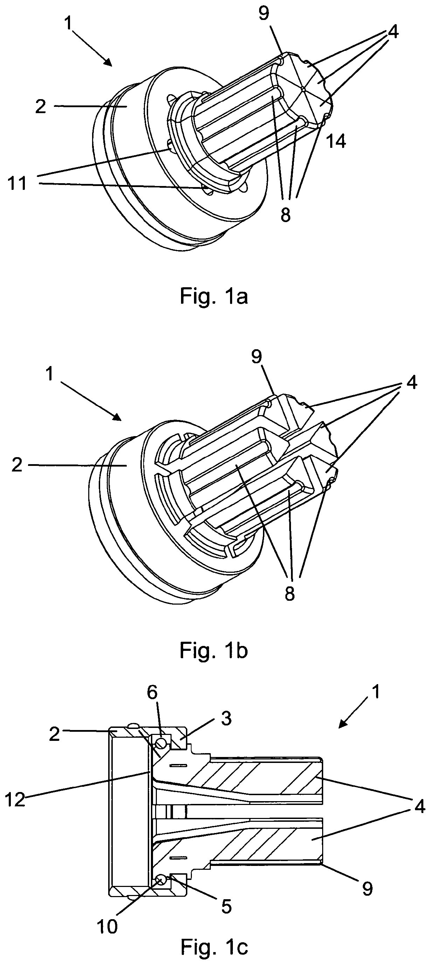

Figur 1a zeigt eine perspektivische Ansicht eines Expansionskopfes gemäß einer Ausführungsform der vorliegenden Erfindung im geschlossenen Zustand.
Figur 1 b zeigt eine perspektivische Ansicht des in Fig. 1a dargestellten im geöffneten Zustand.
Figur 1c zeigt eine Querschnittsansicht des in Figur 1 b dargestellten Expansionskopfes im geöffneten Zustand.
Figur 1d zeigt eine Draufsicht auf die Spreizbacken des in Figur 1b dargestellten Expansionskopfes mit aufgesetztem Rohrende nach dem ersten Aufweitvorgang.
Figur 2 zeigt eine perspektivische Ansicht eines Satzes von Spreizbacken eines Expansionskopfes gemäß einer weiteren Ausführungsform der vorliegenden Erfindung.
Figur 3a zeigt eine perspektivische Ansicht eines Satzes von Spreizbacken eines Expansionskopfes gemäß einer weiteren Ausführungsform der vorliegenden Erfindung.
Figur 3b zeigt eine Draufsicht auf die Spreizbacken des in Fig. 3a dargestellten Expansionskopfes mit aufgesetztem Rohrende nach dem ersten Aufweitvorgang.
Figur 4 zeigt eine perspektivische Ansicht eines Satzes von Spreizbacken eines Expansionskopfes gemäß einer weiteren Ausführungsform der vorliegenden Erfindung.
Figur 5a zeigt eine perspektivische Ansicht eines Satzes von Spreizbacken eines Expansionskopfes gemäß einer weiteren Ausführungsform der vorliegenden Erfindung.
Figur 5b zeigt eine Draufsicht auf die Spreizbacken des in Fig. 5a dargestellten Expansionskopfes mit aufgesetztem Rohrende nach dem ersten Aufweitvorgang.

### Detaillierte Beschreibung bevorzugter Ausführungsformen

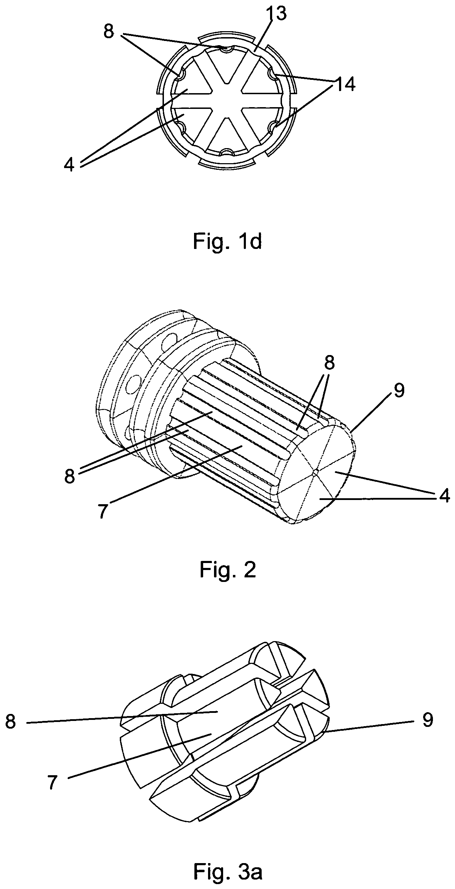

In Figur 1 ist ein Expansionskopf gemäß einer Ausführungsform der vorliegenden Erfindung im geschlossenen Zustand (Fig. 1a) und im geöffneten Zustand oder Expansionszustand (Fig. 1b bis Fig. 1d) gezeigt. Der erfindungsgemäße Expansionskopf 1 umfasst einen Satz von sechs Spreizbacken 4 sowie eine Überwurfmutter 2, wobei die Spreizbacken 4 durch die Öffnung der Überwurfmutter 2 geführt sind. Im geschlossen Zustand bilden die aus der Überwurfmutter 2 herausragenden Teile der Spreizbacken 4 einen etwa zylinderförmigen Aufweitbereich. Im geschlossenen Zustand beschreibt die Außenwandung 7 der Spreizbacken 4 annähernd eine Zylindermantelfläche. Als "Aufweitbereich" wird hierin der Bereich des Expansionskopfes 1 bezeichnet in dem sich beim Aufweitvorgang das aufzuweitende hohle Werkstück befindet. Dieses liegt dabei an der Außenseite der Spreizbacken 4 an. Zusammen ergibt der Satz von sektorförmig ausgebildeten Spreizbacken 4 im geschlossenen Zustand des Expansionskopfes 1 eine geschlossene Form mit einer im Wesentlichen zylindrischen Form im Aufweitbereich des Expansionskopfes 1. An ihrer der Überwurfkappe 2 abgewandten Seite weisen die Spreizbacken 4 jeweils eine Verjüngung 9 auf, die vorzugsweise als abgerundeter Randbereich ausgebildet ist. Durch eine derartige Verjüngung 9 kann ein gleichmäßiger Übergang zwischen dem aufgeweiteten und dem nicht aufgeweiteten Teil des hohlen Werkstücks nach dem Aufweitvorgang erzielt werden.

Jede der Spreizbacken 4 ist dabei sektorförmig ausgebildet und weist an der Außenwandung 7 eine sich in Richtung der Längsachse der Spreizbacken 4 erstreckende Vertiefung 8 auf. Die Vertiefung 8 ist dabei mittig in der Außenfläche 7 der Spreizbacke 4 ausgebildet und weist einen halbkreisförmigen Querschnitt auf. In anderen Ausführungsformen der vorliegenden Erfindung sind alternativ auch andere Querschnitte, beispielsweise ovale, dreieckige, rechteckige, quadratische Querschnitte sowie Kombinationen der genannten Querschnittformen, möglich. Die Vertiefung 8 erstreckt sich dabei über etwa 30 % der Fläche der Außenfläche 7 der Spreizbacke 4 und besitzt an ihrer tiefsten Stelle eine Tiefe, die etwa 15 % des Durchmessers des durch die Spreizbacken 4 gebildeten Zylinders entspricht.

Der in Fig. 1a dargestellte Expansionskopf 1 ist in Figur 1 b im geöffneten Zustand gezeigt. Dabei sind die Spreizbacken jeweils radial nach außen versetzt angeordnet, so dass sie nun beabstandet voneinander angeordnet sind.

Wie die in Fig. 1c gezeigte Querschnittansicht des erfindungsgemäßen Expansionskopfes 1 zeigt, weist die Überwurfkappe 2 einen radial einwärts gerichteten Führungsflansch 3 und einen Satz von sektorförmig ausgebildeten Spreizbacken 4. Jeder der sektorförmig ausgebildeten Spreizbacken 4 ist einzeln durch einen Innenflanschsektor 5, der mit dem Führungsflansch 3 überlappt, in einer radiale Nut 6 in der Überwurfkappe 2 radial beweglich geführt. Die Innenflanschsektoren 5 weisen auf ihren Außenseiten Nutsektoren auf, die sich im Gesamtumfang des Expansionskopfes 1 zu einer umlaufenden Nut an der Außenseite der Innenflanschsektoren 5 ergänzen, in die ein ringförmiges Rückführmittel 10 für die Rückführung der Spreizbacken 4 vom geöffneten in den geschlossenen Zustand des Expansionskopfes 1 aufgenommen ist. Das Rückführmittel 10 ist dabei bevorzugt so gewählt, dass seine Rückstellkraft für die Rückführung der Spreizbacken 4 vom offenen in den geschlossenen Zustand ausreichend ist. In der dargestellten Ausführungsform handelt es sich bei dem Rückführmittel 10 um einen elastischen O-Ring. Alternativ kann auch eine ringförmige Zugfeder in vorteilhafter Weise eingesetzt werden. In jedem der Innenflanschsektoren 5 befindet sich eine Bohrung, in der jeweils ein Ende eines Führungsstifts aufgenommen ist.

In dem Führungsflansch 3 sind radiale Führungsnuten 11 (Fig. 1a) für die Aufnahme und die Bewegung von Führungsstiften angeordnet. Die Anzahl der Führungsnuten 11 entspricht dabei der Anzahl der Führungsstifte und damit der Anzahl der Spreizbacken 4 des Expansionskopfes 1. Die Führungsstifte können jeweils mit Presssitz in der zugehörigen Bohrung in den Innenflanschsektoren 10 fest mit den Innenflanschsektoren 10 verbunden sein. In alternativen Ausführungsformen des erfindungsgemäßen Expansionskopfes 1 können jeweils das eine Ende der Führungsstifte in ein Gewinde eingeschraubt oder mit dem Innenflanschsektor 5 verstiftet sein. Weiterhin hinaus können die Führungsstifte 8 auch einstückig an den jeweiligen Innenflanschsektor 10 angeformt sein.

Zur axialen Festlegung der Spreizbacken 4 in der Überwurfkappe 2 dient ein Befestigungsmittel. In der in den Fig. 1c dargestellten Ausführungsform des erfindungsgemäßen Expansionskopfes ist eine in die Überwurfkappe 2 eingepresste Befestigungsscheibe 12 als Befestigungsmittel für die Spreizbacken 4 eingesetzt. In alternativen Ausführungsformen kann ein Sicherungsring, eine Scheibe mit einem Sicherungsring oder eine Gewindescheibe, die in ein in ein Gewinde an der Innenseite der Überwurfkappe 2 eingebracht ist, als Befestigungsmittel zum Einsatz kommen. An ihrer Innenseite sind die Spreizbacken 4 durch Kegelsegmentflächen begrenzt, die sich im geschlossenen Zustand des Expansionskopfes 1 zu einer Kegelfläche ergänzen. Der Öffnungswinkel der Kegelsegmentflächen entspricht dabei dem Kegelwinkel des Spreizdorns des Aufweitwerkzeuges. Daher wirkt die Kegelfläche des Spreizdorns beim Aufweitvorgang mit den Kegelsegmentflächen der Spreizbacken 4 zusammen. Durch Eintreiben des Spreizdorns in den Expansionskopf schiebt die Kegelfläche des Spreizdorns die Kegelsegmentflächen der Spreizbacken radial nach außen. Ist über die Außenflächen des Expansionskopfes 1 ein hohles Werkstück, beispielsweise ein Kunststoffrohr, geführt, liegen die Außenflächen des Expansionskopfes 1 zunächst an der Rohrinnenseite an. Mit zunehmender Eindringtiefe des Spreizdorns werden die Außenflächen der Spreizbacken 4 radial nach außen bewegt, wodurch das Rohrende, das über die Spreizbacken 4 geführt ist, aufgeweitet wird. Um das Risiko der Bildung von Längsriefen in dem aufgeweiteten Werkstück zu verringern, können die äußeren Kanten in Längsrichtung der Spreizbacken 4 abgerundet, gebrochen oder angefast sein.

Eine Draufsicht auf den Satz von Spreizbacken des erfindungsgemäßesen Expansionskopfes mit darauf aufgesetztem Rohrende 13 nach einem derartigen Aufweitvorgang ist Fig. 1d dargestellt. Im Bereich der Vertiefungen 8 jeder Spreizbacke 4 weist das aufgeweitete Rohrende eine signifikante Verformung 14 auf. Eine Wiederholung des Aufweitvorganges nach einer Drehung des Aufweitwerkzeuges um etwa 30° relativ zum Rohrende 13 führt dazu, dass die Verformungen 14 nicht vollständig entfernt werden, so dass die Verformungen 14 als Sollleckagestellen im unverpressten Zustand einer Rohrverbindung erhalten bleiben.

Im Folgenden wird die vorliegende Erfindung im Zusammenhang mit weiteren Ausführungsformen erläutert. Es wird dabei auf die Unterschiede eingegangen, um Wiederholungen zu vermeiden, und weitere Erläuterungen zu der in Fig. 1a bis Fig. 1d gezeigten Ausführungsform gelten auch für die weiteren Ausführungsformen entsprechend. Gleiche Bezugszeichen beziehen sich dabei auf gleiche Gegenstände.

Figur 2 zeigt den Satz von sechs Spreizbacken 4 eines Expansionskopfes 1 gemäß einer weiteren Ausführungsform der vorliegenden Erfindung in einer perspektivischen Ansicht, die an einem Ende wiederum jeweils eine Verjüngung 9 aufweisen. An der Außenwandung 7 von jeder der sektorförmig ausgebildeten Spreizbacken 4 sind jeweils zwei sich in Richtung der Längsachse der Spreizbacken 4 erstreckende Vertiefungen 8 angeordnet. Die Vertiefungen 8 sind dabei etwa symmetrisch zur Mitte der Außenfläche 7 ausgebildet und verfügen wiederum über einen halbkreisförmigen Querschnitt, wobei alternativ andere Querschnittsformen verwendet werden können. Die Vertiefungen 8 nehmen etwa 50 % der Fläche der Außenwandung 7 jeder Spreizbacke 4 ein. An der tiefsten Stelle entspricht die Tiefe der Vertiefung etwa 20 % des Durchmessers des durch die Spreizbacken 4 gebildeten Zylinders.

Bei Durchführung eines Aufweitvorganges an einem Rohrende 13 werden an den Vertiefungen 8 jeweils Verformungen 14 gebildet, in diesem Fall jeweils zwei Verformungen 14 pro Spreizbacke 4. Eine Wiederholung des Aufweitvorganges nach einer Drehung des Aufweitwerkzeuges um etwa 30° relativ zum Rohrende 13 führt dazu, dass die Verformungen 14 nicht vollständig entfernt werden, so dass die Verformungen 14 als Sollleckagestellen im unverpressten Zustand einer Rohrverbindung erhalten bleiben.

Ein weiterer Satz von sechs Spreizbacken 4 eines Expansionskopfes 1 gemäß einer weiteren Ausführungsform der vorliegenden Erfindung ist in Fig. 3a in einer perspektivischen Ansicht dargestellt. In dieser Ausführungsform ist die Außenwandung 7 einer der Spreizbacken 4 radial in Richtung der Längsachse der Spreizbacken 4 versetzt angeordnet. In diesem Fall erstreckt sich die Vertiefung 8 also über die gesamte Außenwandung 7 dieser Spreizbacke 4. Die Vertiefung 8 nimmt damit etwa 17 % der Fläche der Außenwandung 7 der Spreizbacken 4 ein; ihre Tiefe entspricht etwa 10 % des Durchmessers des durch die Spreizbacken 4 gebildeten Zylinders.

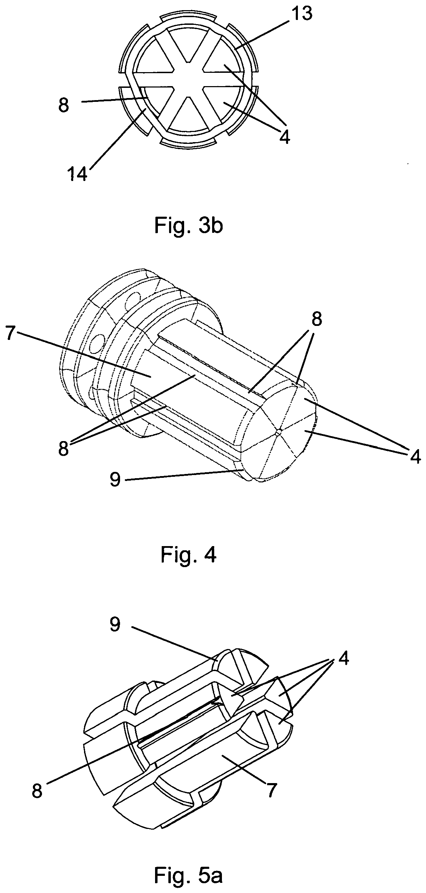

Eine Draufsicht auf den Satz von Spreizbacken des erfindungsgemäßesen Expansionskopfes mit darauf aufgesetztem Rohrende 13 nach einem ersten Aufweitvorgang ist Figur 3b dargestellt. Im Bereich der radial in Richtung der Längsachse versetzten Spreizbacke 4 ist eine großflächige Verformung 14 ausgebildet. Eine Wiederholung des Aufweitvorganges nach einer Drehung des Aufweitwerkzeuges um etwa 30° relativ zum Rohrende 13 führt dazu, so dass die Verformung 14 zumindest teilweise erhalten bleibt. Im unverpressten Zustand einer Rohrverbindung bildet der Rest dieser Verformung 14 somit eine Sollleckagestelle.

Eine perspektivische Ansicht des Satzes von sechs Spreizbacken 4 eines Expansionskopfes 1 gemäß einer weiteren Ausführungsform der vorliegenden Erfindung ist in Fig. 4 gezeigt. Auch bei dieser Ausführungsform sind an den seitlichen Rand der sektorförmig ausgebildeten Spreizbacken 4 jeweils sich in Richtung der Längsachse der Spreizbacken 4 erstreckende Vertiefungen 8 angeordnet. Diese weisen jedoch einen rechtwinkligen Querschnitt auf, so dass sich die Vertiefungen 8 benachbarter Spreizbacken zu einer ebenfalls rechtwinkligen Ausnehmung ergänzen. Alternativ können auch hier andere Querschnittsformen zum Einsatz kommen. Die Vertiefungen 8 nehmen etwa 25 % der Fläche der Außenwandung 7 jeder Spreizbacke 4 ein. Die Tiefe der Vertiefung entspricht etwa 10 % des Durchmessers des durch die Spreizbacken 4 gebildeten Zylinders.

Bei Durchführung eines Aufweitvorganges an einem Rohrende 13 wird an den durch die Vertiefungen 8 gebildeten Ausnehmungen jeweils eine Verformungen des Rohrendes 13 gebildet. Eine Wiederholung des Aufweitvorganges nach einer Drehung des Aufweitwerkzeuges um etwa 30° relativ zum Rohrende 13 führt dazu, dass die Verformungen 14 nicht vollständig entfernt werden, so dass die Verformungen 14 als Sollleckagestellen im unverpressten Zustand einer Rohrverbindung erhalten bleiben.

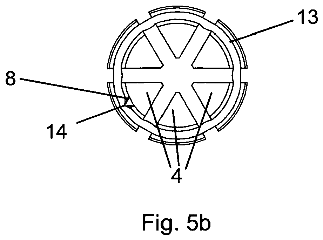

Ein weiterer Satz von sechs sektorförmig ausgebildeten Spreizbacken 4 eines Expansionskopfes 1 gemäß einer weiteren Ausführungsform der vorliegenden Erfindung ist in Fig. 5a in einer perspektivischen Ansicht dargestellt. Eine der Spreizbacken 4 weist darin an der Außenwandung 7 eine sich in Richtung der Längsachse der Spreizbacken 4 erstreckende Erhöhung 8 auf. Die Erhöhung 8 ist dabei mittig in der Außenfläche 7 der Spreizbacke 4 ausgebildet und weist einen dreieckigen Querschnitt auf. In anderen Ausführungsformen der vorliegenden Erfindung sind alternativ auch andere Querschnitte, beispielsweise runde, ovale, rechteckige, quadratische Querschnitte sowie Kombinationen der genannten Querschnittformen, möglich. Die Erhöhung 8 erstreckt sich dabei über etwa 3 % der Fläche der Außenfläche 7 der Spreizbacke 4 und besitzt an ihrer höchsten Stelle eine Höhe, die etwa 5 % des Durchmessers des durch die Spreizbacken 4 gebildeten Zylinders entspricht. Eine Draufsicht auf den Satz von Spreizbacken des erfindungsgemäßesen Expansionskopfes mit darauf aufgesetztem Rohrende 13 nach einem derartigen Aufweitvorgang ist Figur 5b dargestellt. Im Bereich der Erhöhung 8 weist das aufgeweitete Rohrende eine erhebliche Verformung 14 auf. Eine Wiederholung des Aufweitvorganges nach einer Drehung des Aufweitwerkzeuges um etwa 30° relativ zum Rohrende 13 führt dazu, dass die Verformungen 14 annähernd unverändert erhalten bleibt. Im unverpressten Zustand einer Rohrverbindung bewirkt die Verformung 14 somit eine Sollleckagestelle.

## Patentansprüche

1. Expansionskopf (1) für Aufweitwerkzeuge für hohle Werkstücke, insbesondere für die Enden von Kunststoffrohren und Metall-Kunststoff-Verbundrohren, umfassend:
- eine Überwurfkappe (2) mit einem radial einwärts gerichteten Führungsflansch (3), und
- einen Satz von sektorförmig ausgebildeten Spreizbacken (4), die jeweils einzeln durch einen Innenflanschsektor (5), der mit dem Führungsflansch (3) überlappt, in der Überwurfkappe (2) radial beweglich aufgenommen sind, wobei der Satz von sektorförmig ausgebildeten Spreizbacken (4) zwischen einem geschlossenen Zustand und einem Expansionszustand beweglich ist und im geschlossenen Zustand durch die Außenwandung (7) der Spreizbacken (4) annähernd eine Zylindermantelfläche ausgebildet ist,
wobei die Außenwandung (7) mindestens einer der Spreizbacken (4) wenigstens eine sich in Richtung der Längsachse der Spreizbacken (4) erstreckende Vertiefung und/oder Erhöhung (8) aufweist.
**dadurch gekennzeichnet, dass** sich die Vertiefung und/oder Erhöhung (8) über die gesamte Außenfläche (7) mindestens einer Spreizbacke (4) erstreckt.

2. Expansionskopf (1) nach Anspruch 1, **dadurch gekennzeichnet, dass** die Vertiefung und/oder Erhöhung (8) ungefähr in der Mitte der Außenwandung (7) der Spreizbacke (4) angeordnet ist.

3. Expansionskopf (1) nach Anspruch 1, **dadurch gekennzeichnet, dass** mindestens eine der Spreizbacken zwei Vertiefungen und/oder Erhöhungen (8) aufweist.

4. Expansionskopf (1) nach Anspruch 3, **dadurch gekennzeichnet, dass** die beiden Vertiefungen und/oder Erhöhungen (8) jeweils am seitlichen Rand der Außenwandung (7) angeordnet sind.

5. Expansionskopf (1) nach einem der Ansprüche 1 bis 4, **dadurch gekennzeichnet, dass** sich die Vertiefung(en) und/oder Erhöhung(en) (8) über 2 % bis 50 % der Fläche der Außenwandung (7) erstreckt/erstrecken.

6. Expansionskopf (1) nach einem der Ansprüche 1 bis 5, **dadurch gekennzeichnet, dass** die Vertiefung(en) und/oder Erhöhung(en) (8) eine maximale Tiefe/Höhe aufweist/aufweisen, die 3 % bis 35% des Durchmessers des durch die Spreizbacken (4) im geschlossenen Zustand gebildeten Zylinders entspricht.

7. Expansionskopf (1) nach einem der Ansprüche 1 bis 6, **dadurch gekennzeichnet, dass** jede der Spreizbacken (4) mindestens eine Vertiefung und/oder Erhöhung (8) aufweist.

8. Expansionskopf (1) nach einem der Ansprüche 1 bis 7, **dadurch gekennzeichnet, dass** die Spreizbacken (4) an ihrer der Überwurfkappe (2) abgewandten Seite eine Verjüngung (9) oder Fase aufweisen.

9. Aufweitwerkzeug für hohle Werkstücke, insbesondere für die Enden von Rohren aus Kunststoffen und aus mit Kunststoffen überzogenen Metallen, umfassend einen Expansionskopf (1) nach einem der Ansprüche 1 bis 8.

10. Verwendung eines Expansionskopfes (1) nach einem der Ansprüche 1 bis 8 oder eines Aufweitwerkzeugs nach Anspruch 9 zur Erzeugung einer Sollleckagestelle im unverpressten Zustand einer Rohrverbindung.

## Claims

1. Expansion head (1) for expansion tools for hollow workpieces, in particular for the ends of plastics tubes and metal/plastics composite tubes, comprising:
- a union cap (2) with a radially inwardly directed guide flange (3), and
- a set of expanding jaws (4) which are of sector-shaped design and are in each case individually accommodated in a radially movable manner in the union cap (2) by an inner flange sector (5), which overlaps with the guide flange (3), wherein the set of expanding jaws (4) of sector-shaped design is movable between a closed state and an expansion state, and in the closed state, a cylinder jacket surface is approximately formed by the outer wall (7) of the expanding jaws (4),
wherein the outer wall (7) of at least one of the expanding jaws (4) has at least one depression and/or elevation (8) extending in the direction of the longitudinal axis of the expanding jaws (4),
**characterized in that**
the depression and/or elevation (8) extends over the entire outer surface (7) of at least one expanding jaw (4).

2. Expansion head (1) according to Claim 1, **characterized in that** the depression and/or elevation (8) is arranged approximately at the centre of the outer wall (7) of the expanding jaw (4).

3. Expansion head (1) according to Claim 1, **characterized in that** at least one of the expanding jaws has two depressions and/or elevations (8).

4. Expansion head (1) according to Claim 3, **characterized in that** the two depressions and/or elevations (8) are arranged in each case on the lateral edge of the outer wall (7).

5. Expansion head (1) according to one of Claims 1 to 4, **characterized in that** the depression(s) and/or elevation(s) (8) extends/extend over 2% to 50% of the area of the outer wall (7).

6. Expansion head (1) according to one of Claims 1 to 5, **characterized in that** the depression(s) and/or elevation(s) (8) has/have a maximum depth/height which corresponds to 3% to 35% of the diameter of the cylinder formed by the expanding jaws (4) in the closed state.

7. Expansion head (1) according to one of Claims 1 to 6, **characterized in that** each of the expanding jaws (4) has at least one depression and/or elevation (8).

8. Expansion head (1) according to one of Claims 1 to 7, **characterized in that** the expanding jaws (4) have a taper (9) or bevel on their side facing away from the union cap (2).

9. Expansion tool for hollow workpieces, in particular for the ends of pipes made of plastics and made of metals covered with plastics, comprising an expansion head (1) according to one of Claims 1 to 8.

10. Use of an expansion head (1) according to one of Claims 1 to 8 or of an expansion tool according to Claim 9 for producing a desired leakage point in the uncompressed state of a pipe connection.

## Revendications

1. Tête d'expansion (1) pour outils d'écartement pour pièces creuses, en particulier pour les extrémités de tubes en plastique et de tubes composites métal-plastique, comprenant :
- un capuchon d'accouplement (2) avec une bride de guidage (3) orientée radialement vers l'intérieur, et
- un ensemble de mâchoires d'écartement (4) réalisées en forme de secteurs qui sont reçues à chaque fois individuellement, par un secteur de bride intérieur (5) qui chevauche la bride de guidage (3), de manière déplaçable radialement dans le capuchon d'accouplement (2), l'ensemble de mâchoires d'écartement (4) réalisées en forme de secteurs étant déplaçable entre un état fermé et un état d'expansion et, dans l'état fermé, une surface d'enveloppe cylindrique étant approximativement formée par la paroi extérieure (7) des mâchoires d'écartement (4),
la paroi extérieure (7) d'au moins l'une des mâchoires d'écartement (4) présentant au moins un renfoncement et/ou un rehaussement (8) s'étendant dans la direction de l'axe longitudinal des mâchoires d'écartement (4),
**caractérisée en ce que**
le renfoncement et/ou le rehaussement (8) s'étend(ent) sur toute la surface extérieure (7) d'au moins une mâchoire d'écartement (4).

2. Tête d'expansion (1) selon la revendication 1, **caractérisée en ce que** le renfoncement et/ou le rehaussement (8) est/sont disposé(s) approximativement au milieu de la paroi extérieure (7) de la mâchoire d'écartement (4).

3. Tête d'expansion (1) selon la revendication 1, **caractérisée en ce qu'**au moins l'une des mâchoires d'écartement présente deux renfoncements et/ou rehaussements (8).

4. Tête d'expansion (1) selon la revendication 3, **caractérisée en ce que** les deux renfoncements et/ou rehaussements (8) sont à chaque fois disposés au niveau du bord latéral de la paroi extérieure (7).

5. Tête d'expansion (1) selon l'une quelconque des revendications 1 à 4, **caractérisée en ce que** le ou les renfoncements et/ou rehaussements (8) s'étendent sur 2 % à 50 % de la surface de la paroi extérieure (7).

6. Tête d'expansion (1) selon l'une quelconque des revendications 1 à 5, **caractérisée en ce que** le ou les renfoncements et/ou rehaussements (8) présentent une profondeur/hauteur maximale qui correspond à 3 % à 35 % du diamètre du cylindre formé par les mâchoires d'écartement (4) dans l'état fermé.

7. Tête d'expansion (1) selon l'une quelconque des revendications 1 à 6, **caractérisée en ce que** chacune des mâchoires d'écartement (4) présente au moins un renfoncement et/ou un rehaussement (8).

8. Tête d'expansion (1) selon l'une quelconque des revendications 1 à 7, **caractérisée en ce que** les mâchoires d'écartement (4) présentent, au niveau de leur côté opposé au capuchon d'accouplement (2), un rétrécissement (9) ou un biseau.

9. Outil d'écartement pour pièces creuses, en particulier pour les extrémités de tubes en plastiques et en métaux revêtus de plastiques, comprenant une tête d'expansion (1) selon l'une quelconque des revendications 1 à 8.

10. Utilisation d'une tête d'expansion (1) selon l'une quelconque des revendications 1 à 8 ou d'un outil d'écartement selon la revendication 9 pour produire une zone de fuite de consigne dans l'état non comprimé d'un raccord de tubes.
